Europäisches Patentamt

(19) European Patent Office

Office européen des brevets

(11) EP 0 843 136 A1

(12) **EUROPEAN PATENT APPLICATION**
published in accordance with Art. 158(3) EPC

(43) Date of publication:
20.05.1998 Bulletin 1998/21

(51) Int. Cl.$^6$: **F25B 15/04**, C09K 5/04

(21) Application number: 97927382.8

(22) Date of filing: 18.06.1997

(86) International application number:
PCT/JP97/02091

(87) International publication number:
WO 97/48953 (24.12.1997 Gazette 1997/55)

(84) Designated Contracting States:
DE ES FR GB IT SE

(30) Priority: 19.06.1996 JP 158300/96
17.06.1997 JP 160050/97

(71) Applicant:
Hitachi Building Equipment Engineering Co., Ltd.
Tokyo 101 (JP)

(72) Inventors:
• SAKAI, Tadao
Saitama 344-01 (JP)
• FUKUSHIMA, Yukio
Kanagawa 215 (JP)
• ITO, Masahiko
Ibaraki 313 (JP)

(74) Representative:
Powell, Stephen David et al
WILLIAMS, POWELL & ASSOCIATES,
4 St Paul's Churchyard
London EC4M 8AY (GB)

(54) **REFRIGERANT COMPOSITION FOR ABSORPTION REFRIGERATORS**

(57) An environmentally harmless refrigerant composition for ammonia absorption-refrigerators which can dispense with toxic chromatic inhibitors used in the prior art. This composition comprises an aqueous solution of ammonia having a predetermined concentration and at least one of nitrate and nitrite and the concentration of the nitrate or nitrite is selected within such a range as to substantially minimize the corrosion of the iron-based materials used in the refrigerator, whereby the composition exhibits an excellent corrosion-inhibiting effect and an excellent effect of inhibiting the generation of non-condensable gas. When the concentration of the nitrate or nitrite is 0.01% by weight or above, the corrosion-inhibiting effect is particularly excellent.

FIG. 2

**Description**

FIELD OF THE INVENTION

The present invention relates to a refrigerant composition for use in absorption-refrigerators, and more particularly to a pollution-free refrigerant composition suitable for use in absorption-refrigerators which use ammonia as a refrigerant and water as an absorbing medium, friendly to the natural environment, and having no adverse affect on the human health.

BACKGROUND OF THE INVENTION

Refrigerators called "absorption type refrigerator or absorption-refrigerator" produce a low temperature by chemical condensation and dilution of a cooling medium. They include one type using water as a refrigerant and an aqueous LiBr (lithium bromide) solution as an absorbing medium, and another type in which ammonia is used as a refrigerant and water is as an absorbing medium, as disclosed in the United States Patent No. 4,311,024. The latter type of absorption-refrigerator using an aqueous ammonia as a working fluid is widely used in practice since it is advantageous in that ammonia used as a refrigerant provides a low temperature below the freezing point, the range in required concentration of the working fluid is relatively wide, the noise from this type of absorption-refrigerator is lower than those from a turbo-refrigerator and absorption-refrigerators of the former type using water as refrigerant and LiBr as absorbing medium and that air-cooling can be provided easily and effectively.

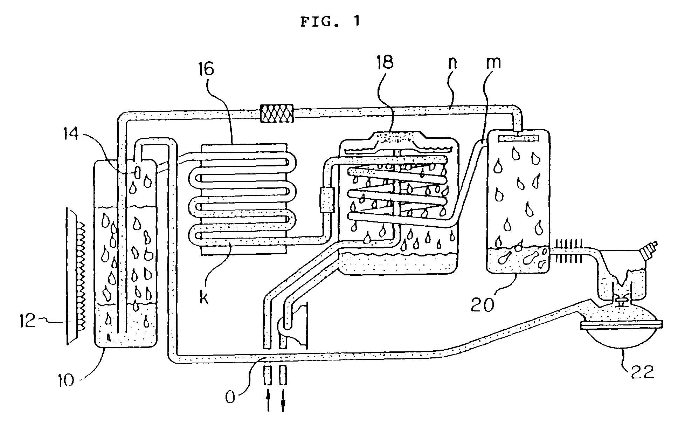

FIG. 1 schematically shows the refrigerating cycle of an absorption-refrigerator in which the above-mentioned water having absorbed the ammonia is used as a working fluid.

This absorption-refrigerator provides a low temperature owing to the heat of vaporization when the aqueous ammonia solution is evaporated. In a regenerator 10 of the refrigerating cycle, the aqueous ammonia solution is heated by a burner 12 and vaporizes as ammonia gas and steam. They are passed into a rectifier 14 where they will be cooled and separated into ammonia gas and water. The ammonia gas is cooled in a condenser 16 to be an aqueous ammonia solution $\underline{k}$ which will be supplied into an evaporator 18. Water separated by condensation in the rectifier 14 becomes a dilute ammonia solution $\underline{n}$ which will be passed into an absorber 20. In the evaporator 18, the ammonia solution $\underline{k}$ is vaporized to be an ammonia gas $\underline{m}$. At this time, the vaporization of the aqueous ammonia solution $\underline{k}$ creates a low temperature. The ammonia gas $\underline{m}$ resulted from the evaporation is absorbed by the dilute ammonia solution $\underline{n}$ in the absorber 20 to be a condensed ammonia solution $\underline{o}$ which will be recycled by a pump 22 to the regenerator 10. The above is one refrigerating cycle.

The concentration of the aqueous ammonia solution used as the working fluid in the absorption-refrigerators of the above prevailing type may range widely. For the solution to have a concentration of 37%, for example, before charged into the refrigerator, it is heated and cooled within the refrigerating cycle so as to be diluted and condensed to a range of about 15 to 37 % At this time, the aqueous ammonia solution has a temperature varying within a range of roughly 45 to 170 °C. Especially in the regenerator, the aqueous ammonia solution has a concentration of about 15% and a high temperature of about 170°C at which the aqueous ammonia solution will attack most vigorously the flowing path of the ammonia. Therefore, it is indispensable to protect against corrosion the iron-based materials such as carbon steel commonly used to build the major component members of the refrigerator.

Furthermore, it is well known that when a corrosion takes place, hydrogen gas will be produced as a side-reaction derivative. Since the illustrated absorption-refrigerator has a complicated internal structure, such hydrogen gas will cause a gas pocket which will increase the pressure inside the refrigerating cycle, resulting in a deterioration of the cooling performance.

To prevent the corrosion, it is commonly done to add a corrosion inhibitor to the aqueous ammonia solution. Such inhibitors having so far been proposed include a chromate such as $Na_2CrO_4$ (disclosed in the Japanese Unexamined Patent Publication No. 50-3933), molybdate such as $Na_2MoO_4$ (disclosed in the Japanese Unexamined Patent Publication No. 5-180532), and Hydrazine ($N_2H_4$) (disclosed in the Japanese Unexamined Patent Publication No. 5-322357).

Among the above-mentioned corrosion inhibitors, the chromate such as $Na_2CrO_4$ is a very strong oxidant. It oxidizes the surface of an iron-made structural body of the refrigerator to produce an oxide film which will prevent the iron body from being further oxidized. When used as a corrosion inhibitor in the absorption-refrigerator using an aqueous ammonia solution as a working fluid, the chromate has a satisfactory effect of corrosion inhibition. Currently, however, it will possibly have a malinfluence on the natural environment and human body. More specifically, since the sexivalent chrome in the chromate is extremely toxic and also carcinogenic, there is a problem to solve in securing the safety in handling (disassembling) the used refrigerator. Further, the chromate has no effect of inhibiting non-condensable gas or hydrogen gas from arising. The gas will be generated in proportion to the corrosion, possibly degrading the refrigerator performance.

The present invention has an object to provide a refrigerant composition for use in absorption-refrigerators, which is friendly to the natural environment, safe with no adverse affect on the human health, and has an outstanding effect of inhibiting the corrosion and non-condensable gas generation.

## DISCLOSURE OF THE INVENTION

The above object can be accomplished by providing a refrigerant composition comprising an aqueous ammonia solution of a predetermined concentration and at least one of nitrate and nitrite added to the aqueous ammonia solution, the concentration of the nitrate or nitrite being in such a range as to substantially minimize the corrosion of iron-based materials used to build the refrigerator.

A concentration of such an aqueous ammonia solution contained in a refrigerant composition is determined based on which temperature the refrigerant in the evaporator is to be evaporated at, and selected taking in consideration the volume of the entire piping made of iron-based materials building together a refrigerating cycle and pressure of the fluid through the piping. When the refrigerating cycle is in operation, the concentration of the aqueous ammonia solution is the lowest in the regenerator where the ammonia is at the highest temperature.

For producing an oxide film on the inner walls of the component members of an absorption-refrigerator, namely, on the surfaces of the iron-based materials such as carbon steel, that are in contact with an aqueous ammonia solution having a high temperature and relatively high concentration, an oxidant should exist in the presence of the iron-based materials. To inhibit gas generation, it is necessary to rapidly produce an anti-corrosion film by a powerful oxidization. By adding either singly nitrate or nitrite or both to the aqueous ammonia solution of a predetermined concentration to raise the surface potential of the iron-based materials such as carbon steel, the refrigerant composition according to the present invention can produce an anti-corrosion film and inhibit the hydrogen gas generation. The added nitrate and nitrite oxidize such iron-based materials more vigorously than such oxides as molyodate, tungstate, etc., and thus they can produce an anti-corrosion film on the iron surfaces in a shorter time.

Furthermore, when the nitrate ion generated through solving of the nitrate oxidizes the iron to produce an anti-corrosion film, it itself is reduced to be a nitrite ion. Since the oxidation and reduction potentials of the nitrate ion are higher than those of proton, hydrogen generation incident to the iron corrosion is inhibited for a time from the production of an oxide film on the ion surface until the inhibition of the corrosion. The reaction is expressed as follows:

$$Fe \rightarrow Fe^{2+} + 2e$$

$$2NO_3^- + 2e \rightarrow 2NO_2$$

Since the reduction of the nitrate ion takes place as a cathode reaction of the corrosion, the generation of hydrogen gas is inhibited, not raising the pressure in the refrigerating cycle.

Also, since both the nitrate and nitrite in the refrigerant composition according to the present invention show a high compatibility with the aqueous ammonia solution, a wide range of concentration may be selected for them as inhibitor. The concentration of additive nitrate or nitrite, or the total concentration of the additive nitrate and nitrite, should be selected within such a range as substantially minimizes the corrosion of the iron-based materials building the absorption-refrigerator, and preferably be selected to be 0.01 percent or more by weight.

Also, in addition to the nitrate or nitrite added to the aqueous ammonia solution of the predetermined concentration, an alkaline metal hydroxide may be added to adjust the concentration of hydrogen ions in the aqueous ammonia solution. Coexistence of the inhibitor and alkali in a refrigerant composition permits to reduce the solubility of the anti-corrosion film produced by the inhibitor, thereby maintaining the anti-corrosion film in a stable state. More specifically, the nitrate or nitrite contained in the refrigerant composition and contributed to produce the anti-corrosion film is reduced and consumed as the time passes. The alkaline metal hydroxide previously added to the aqueous ammonia solution allows to decrease the rate of consumption of the nitrate or nitrite as the inhibitor. As the result, the refrigerant can have a longer service life, which will make it possible to provide a maintenance-free refrigerating cycle.

## BRIEF DESCRIPTION OF THE DRAWINGS

FIG. 1 is a schematic drawing of the refrigeration cycle of an absorption-refrigerator in which water having absorbed ammonia is used as an operating fluid; and
FIG. 2 is a graph showing the relation between the concentration of nitrate or nitrite contained in the refrigerant composition according to the present invention and the corrosion of carbon steel plate.

## BEST MODE OF CARRYING OUT THE INVENTION

The corrosion, anti-corrosion film stability and gas generation tests made on the embodiments of the refrigerant composition according to the present invention will be described in the following:

Test 1:

This is a corrosion test. A test piece was prepared from a surface-polished and degreased carbon steel plate (SS400 specified in the ISO standard). The refrigerant used for this testing was an aqueous ammonia solution of 37% by weight in concentration in which a following inhibitor and hydrogen ion concentration adjusting agent were added. The test piece was immersed in the refrigerant and left in an autoclave at a temperature of 165°C for 200 hours. As the inhibitor added to the aqueous ammonia solution, sodium nitrate ($NaNO_3$) and sodium nitrite ($NaNO_2$) were selected from the nitrates and nitrites. Also comparative refrigerants 1 to 4 were tested. The comparative refrigerant 1 contained no inhibitor. The comparative refrigerants 2 to 4 contained sodium chromate ($Na_2CrO_4$), sodium molybdate ($Na_2MoO4$) and Hydrazine ($N_2H_4$), respectively, as the inhibitor. To adjust the concentration of hydrogen ions in the aqueous ammonia solution, sodium hydroxide selected from the alkaline metal hydroxides was added to the aqueous ammonia solution.

Table 1

| No. | Inhibitor | Concentration (wt %) | pH | Corrosion (mg/dm$^2$) |
|---|---|---|---|---|
| Embodiment 1 | $NaNO_3$ | 0.1 | 13 | 14.3 |
| Embodiment 2 | $NaNO_3$ | 0.05 | 13 | 15.2 |
| Embodiment 3 | $NaNO_3$ | 0.01 | 13 | 17.3 |
| Embodiment 4 | $NaNO_3$ | 0.05 | 12 | 46.8 |
| Embodiment 5 | $NaNO_3$ | 0.001 | 13 | 68.3 |
| Embodiment 6 | $NaNO_2$ | 0.05 | 13 | 17.5 |
| Embodiment 7 | $NaNO_2$ | 0.05 | 12 | 51.3 |
| Embodiment 8 | $NaNO_2$ | 0.1 | 14 | 16.4 |
| Embodiment 9 | $NaNO_2$ | 0.05 | 14 | 17.3 |
| Comparative refrigerant 1 | - | - | - | 99.6 |
| Comparative refrigerant 2 | $Na_2CrO_4$ | 0.1 | - | 15.4 |
| Comparative refrigerant 3 | $Na_2MoO_4$ | 0.1 | - | 71.0 |
| Comparative refrigerant 4 | $N_2H_4$ | 1.0 | - | 72.6 |

As apparent from the above results shown in Table 1, the embodiments 1 to 3, 6, 8 and 9 of the present invention showed excellent inhibitions of corrosion roughly equivalent to that by the comparative refrigerant 2 using sodium chromate. With the refrigerants according to the present invention, the carbon steel could be well inhibited from being corroded. With the embodiments 4 and 7, the corrosion was not so well inhibited since the hydrogen ion concentration in the aqueous ammonia solution was too low as pH 12. Also with the embodiment 5, the corrosion inhibition was not so great since the concentration of the inhibitor was very low as 0.001% by weight. As proved by the test results, however, these embodiments showed a better effect of corrosion inhibition than the comparative refrigerant 3 using sodium molybdate and comparative refrigerant 4 using hydrazine.

Test 2:

This is also a corrosion test. The test was done on embodiments 10 to 17 of the refrigerant composition according to the present invention under the same conditions as in the Test 1. For this test, different kinds of nitrate and nitrite were added as an inhibitor to an aqueous ammonia solution. Lithium hydroxide was added for adjustment of the hydrogen ion concentration. The test results are shown in Table 2.

Table 2

| No. | Inhibitor | Concentration (wt %) | pH | Corrosion (mg/dm$^2$) |
|---|---|---|---|---|
| Embodiment 10 | NaNO$_3$ | 0.3 | 13 | 9.6 |
| Embodiment 11 | KNO$_3$ | 0.3 | 13 | 10.4 |
| Embodiment 12 | Ca(NO$_3$)$_2$ | 0.3 | 13 | 11.2 |
| Embodiment 13 | LiNO$_3$ | 0.3 | 13 | 14.1 |
| Embodiment 14 | NH$_4$NO$_3$ | 0.3 | 13 | 10.1 |
| Embodiment 15 | NaNO$_2$ | 0.3 | 13 | 14.1 |
| Embodiment 16 | KNO$_2$ | 0.3 | 13 | 14.7 |
| Embodiment 17 | Ca(NO$_2$)$_2$ • H$_2$O | 0.3 | 13 | 18.3 |
| Comparative refrigerant 1 | - | - | - | 99.6 |

As shown in Table 2, the concentration of the nitrate or nitrite added as the inhibitor to the aqueous ammonia solution was 0.3% by weight, and the hydrogen ion concentration in the aqueous ammonia solution was pH 13. As known from the above test results, the effect of corrosion inhibition is high independently of the kind of the inhibitor, nitrate or nitrite.

Test 3:

This is also a corrosion test. The test was done on refrigerant embodiments 18 and 19 of the present invention under the same conditions as in the test 1. Nitrate and nitrite were added each in one kind, respectively, as the inhibitor to an aqueous ammonia solution. More specifically, sodium nitrate and sodium nitrite were added in 0.1% by weight, respectively, to the aqueous ammonia solution in the embodiment 18, and sodium nitrate and potassium nitrite (KNO$_2$) were added in 0.1% by weight, respectively, to the aqueous ammonia solution in the embodiment 19. The test results are as shown in Table 3. To adjust the concentration of hydrogen ions in the refrigerant embodiments, potassium hydroxide was added to the aqueous ammonia solution.

Table 3

| No. | Inhibitor | Concentration (wt %) | pH | Corrosion (mg/dm$^2$) |
|---|---|---|---|---|
| Embodiment 18 | NaNO$_3$ + NaNO$_2$ | 0.2 | 13 | 14.1 |
| Embodiment 19 | NaNO$_3$ + KNO$_2$ | 0.2 | 13 | 15.6 |
| Comparative refrigerant 1 | - | - | - | 99.6 |

As seen from Table 3, the addition of both nitrate and nitrite as an inhibitor mixture to the aqueous ammonia solution can also provide a highly effective inhibition of corrosion.

Test 4:

This is an anti-corrosion film stability test. The corrosion resistance depends upon the stability of an anti-corrosion film produced on the iron surface. This test was conducted on refrigerant embodiments 20 and 21 of the present invention. The test piece of carbon steel (SS400) was tested for a passive-state holding current density which is a measure of the anti-corrosion film stability, and the test results were compared with the well-known anodic polarization curve model. For this test, a platinum piece was placed as a counter electrode in a deaerated aqueous ammonia solution of about 15% by weight at a temperature of 165°C and an electrode of Ag/AgCl was placed as a reference electrode. Measurement was done at a potential scanning rate of 20 mV/min. To adjust the hydrogen ion concentration, sodium hydroxide was used. The test results are as shown in Table 4.

Table 4

| No. | Inhibitor | Concentration (wt %) | pH | Passive state hold current density ($\mu A/dm^2$) |
|---|---|---|---|---|
| Embodiment 20 | $NaNO_3$ | 0.3 | 13 | 70 |
| Embodiment 21 | $NaNO_2$ | 0.3 | 13 | 85 |
| Embodiment 22 | $NaNO_3 + NaNO_2$ | 0.2 | 13 | 75 |
| Comparative refrigerant 1 | - | - | - | 320 |
| Comparative refrigerant 2 | $Na_2CrO_4$ | 0.3 | - | 80 |
| Comparative refrigerant 3 | $Na_2MoO_4$ | 0.3 | - | 170 |

As shown in Table 4, the embodiments 20 to 22 of the present invention are roughly equal in passive-state holding current density to the comparative refrigerant 2, but extremely lower than the comparative refrigerants 1 and 3. A very stable anti-corrosion film was found produced on the iron surface of the test pieces in the refrigerant embodiments 20 to 22.

Test 5:

This is a corrosion test. A test piece was prepared from a stainless steel plate (SUS 307 according to the JIS standard) for this test. The test was done under the same conditions as in the test 1. An aqueous ammonia solution of 37% by weight in concentration was used as a refrigerant. It was heated to a temperature of 165°C. The test piece was immersed in the refrigerant for about 200 hours. As the inhibitor, sodium nitrate was added to the ammonia solution in an embodiment 23 and sodium nitrite was to the ammonia in an embodiment 24. For this test, a comparative refrigerant 1 was prepared from an aqueous ammonia solution which contained no inhibitor. For adjustment of the hydrogen ion concentration, sodium hydroxide was used. The test results are shown in Table 5.

Table 5

| No. | Inhibitor | Concentration (wt %) | pH | Corrosion ($mg/dm^2$) |
|---|---|---|---|---|
| Embodiment 23 | $NaNO_3$ | 0.3 | 13 | 8.2 |
| Embodiment 24 | $NaNO_2$ | 0.3 | 13 | 8.8 |
| Comparative refrigerant 1 | - | - | - | 57.5 |

As evident from Table 5, the embodiments of the refrigerant composition according to the present invention show an excellent effect of corrosion inhibition for the carbon steel as well as for the stainless steel.

Test 6:

This is a test of hydrogen gas generation. A test piece was prepared from a carbon steel (SS400), and various refrigerant embodiments of the present invention were tested for generation of hydrogen gas. A container made of Teflon (registered trademark) was put in the autoclave to avoid contact of the refrigerant under test with the autoclave. In an embodiment 25, sodium nitrate of 0.5% by weight was added as the inhibitor to an aqueous ammonia solution of 37% by weight. In embodiments 26 to 28, sodium nitrate of 0.1% by weight was added as the inhibitor to an aqueous ammonia solution of 37% by weight. In an embodiment 29, sodium nitrite of 0.1% by weight was added as the inhibitor to an aqueous ammonia solution of 37% by weight. To adjust the hydrogen iron concentration, sodium hydroxide was added in an appropriate amount to each of the embodiments. For this test, a comparative refrigerant 1 was prepared from an aqueous ammonia solution which contained no inhibitor. The aqueous ammonia solutions were deaerated to a concentration of 15% by weight and maintained at a temperature of 165°C. The test piece (SS400) was immersed and left in the refrigerant for about 1,000 hours. The amount of hydrogen gas generated for this time period was measured. The test results are shown in Table 6.

Table 6

| No. | Inhibitor | Concentration (wt %) | pH | Gas generation (ml/dm$^2$) |
|---|---|---|---|---|
| Embodiment 25 | NaNO$_3$ | 0.5 | 13 | 7.2 |
| Embodiment 26 | NaNO$_3$ | 0.1 | 13 | 11.5 |
| Embodiment 27 | NaNO$_3$ | 0.1 | 12 | 33.3 |
| Embodiment 28 | NaNO$_3$ | 0.1 | 14 | 12.0 |
| Embodiment 29 | NaNO$_2$ | 0.1 | 14 | 26.0 |
| Comparative refrigerant 1 | - | - | - | 2500.0 |
| Comparative refrigerant 2 | Na$_2$CrO$_4$ | 0.1 | - | 25.0 |
| Comparative refrigerant 3 | Na$_2$MoO$_4$ | 0.1 | - | 171.0 |

As seen from Table 6, the embodiments of the present invention generate much less hydrogen gas than the comparative refrigerant 1. The embodiments 25, 26 and 28 in which sodium nitrate was added as the inhibitor and sodium hydroxide was added to adjust the hydrogen ion concentration to pH 13 or pH 14, generated less hydrogen gas than the other embodiments 27 and 29.

When nitrate is used as inhibitor, the cathode reaction incident to a corrosion is such that the nitrate ion is reduced to be a nitrite ion. Therefore, less hydrogen gas is generated than when any other inhibitor is used. The most of the detected hydrogen seems to have been generated during the Schikkor reaction of a small amount of dissolved iron ions.

In Tests 1 to 6 having been described in the foregoing, alkaline metal hydroxide was added to the aqueous ammonia solution to adjust the concentration of the hydrogen ions in the whole solution. However, selecting a sufficiently high concentration of the inhibitor taking it in consideration that the inhibitor is little by little consumed as the time lapses, will make it unnecessary to always add any alkaline metal hydroxide to such a solution.

Next, to examine how the concentration of the nitrate or nitrite contained the refrigerant composition according to the present invention influences on the corrosion of the carbon steel plate (SS400), a further corrosion test was conducted using an autoclave. For this test, three major kinds of refrigerants were prepared by adding the following as an inhibitor to an aqueous ammonia solution:

(a) Only sodium nitrate
(b) Only sodium nitrite
(c) Mixture of sodium nitrate and sodium nitrite

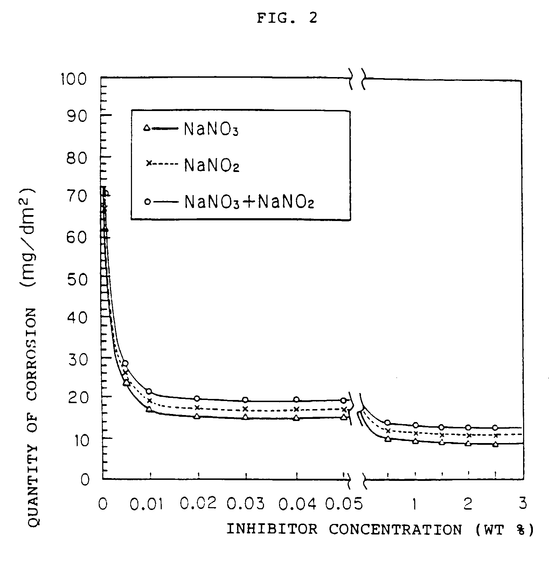

Further, for each of the above three kinds (a) to (c), further refrigerants were prepared by adding the same inhibitor in different concentrations. For this test, the alkaline metal hydroxide was not used. Each refrigerant was deaerated and heated up to 165°C. For the corrosion test, the test piece of the carbon steel was immersed in the test solution thus prepared (about 12.5 in hydrogen ion concentration) for about 200 hours. The test results are as shown FIG. 2. As shown, when the concentration of the inhibitor is relatively low, namely, when it is within a range lower than 0.01% by weight in the refrigerants (a) to (c), the corrosion is about 20 mg/dm$^2$ or more. When the concentration is within a range of 0.01 to 0.05 % by weight, the corrosion is 10 and several mg/dm$^2$. Namely, the effect of corrosion inhibition of the refrigerant (a) is higher than that of the refrigerant (b) which is higher than that of the refrigerant (c). When the concentration of the inhibitor is within a range higher than 0.05% by weight, the corrosion is further smaller. That is, the higher the concentration, the higher the effect of corrosion inhibition is. With the inhibitor concentration of substantially higher than 0.01% by weight, the corrosion of the iron-based materials can be substantially minimized.

Also, before the refrigerant composition according to the present invention is actually used in the refrigerating cycle of an absorption-refrigerator, an alkaline metal hydroxide may be added to the refrigerant to reduce the solubility of the anti-corrosion film produced by the inhibitor, thereby permitting to maintain the anti-corrosion film in a stable status. More specifically, nitrate or nitrite added in the refrigerant composition and contributing to the production of the anti-corrosion film will be reduced and consumed as the time elapses. Coexistence of the inhibitor and alkali permits to decrease the rate of consumption of the nitrate or nitrite, which will lengthen the life of the refrigerant composition. Thus, the refrigerating cycle of an absorption-refrigerator can be used needing no maintenance for a long time.

For our testing, the refrigerant composition according to the present invention was charged in the refrigerating cycle of an actual absorption-refrigerator. The absorption-refrigerator used was an ammonia absorption-refrigerator having a cooling power of 3RT and using a single regenerator. The refrigerant composition was an aqueous ammonia solution of 37% by weight to which sodium nitrate of 1.0% by weight was added. Further, a sodium hydroxide solution was added to the mixture to adjust the hydrogen ion concentration to pH 13. The refrigerator was operated continuously for 1,000 hours. The refrigerant composition showed an excellent power of refrigeration, and neither non-condensable gas generation nor change of internal pressure was found.

As apparent from the foregoing, the refrigerant composition according to the present invention has no toxicity and thus it is friendly to the natural environment and has no adverse affect on the human body. Furthermore, it is outstandingly effective in inhibiting iron-based materials from being corroded and non-condensable gas from taking place.

**Claims**

1. A refrigerant composition for absorption-refrigerators using ammonia as the refrigerant and water as absorbing medium, comprising an aqueous ammonia solution of a predetermined concentration and at least either nitrate or nitrite added as an inhibitor to the aqueous ammonia solution, the concentration of the nitrate or nitrite being within such a range as to substantially minimize the corrosion of the iron-based materials building the refrigerator.

2. A refrigerant composition as set forth in Claim 1, wherein the concentration of the nitrate or nitrite or the total concentration of both is substantially 0.01% or more by weight.

3. A refrigerant for use in absorption-refrigerators using ammonia as the refrigerant and water as absorbing medium, comprising an aqueous ammonia solution of a predetermined concentration, at least either nitrate or nitrite added as an inhibitor to the aqueous ammonia solution, and an alkaline metal hydroxide added to the aqueous ammonia solution to adjust the hydrogen ion concentration.

FIG. 1

FIG. 2

**INTERNATIONAL SEARCH REPORT**

| International application No. |
|---|
| PCT/JP97/02091 |

**A. CLASSIFICATION OF SUBJECT MATTER**

Int. Cl$^6$  F25B15/04, C09K5/04

According to International Patent Classification (IPC) or to both national classification and IPC

**B. FIELDS SEARCHED**

Minimum documentation searched (classification system followed by classification symbols)

Int. Cl$^6$  F25B15/00-15/04, C09K5/00-5/04

Documentation searched other than minimum documentation to the extent that such documents are included in the fields searched

| Jitsuyo Shinan Koho | 1926 – 1997 |
|---|---|
| Kokai Jitsuyo Shinan Koho | 1971 – 1997 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP, 55-89662, A (Georg Alefeld), July 7, 1980 (07. 07. 80) & DE, 2855434, A1 & EP, 12856, A1 | 1 |
| Y | JP, 63-187073, A (Hitachi, Ltd.), August 2, 1988 (02. 08. 88) & US, 4857222, A | 1 – 3 |
| A | JP, 58-224187, A (Showa Denko K.K.), December 26, 1983 (26. 12. 83)(Family: none) | 1 |
| A | JP, 51-110750, A (Career Corp.), September 30, 1976 (30. 09. 76)(Family: none) | 3 |
| E,Y | JP, 9-196491, A (Hitachi Building Equipment Engineering Co., Ltd.), July 31, 1997 (31. 07. 97)(Family: none) | 1 – 3 |

☐ Further documents are listed in the continuation of Box C.    ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| September 12, 1997 (12. 09. 97) | September 24, 1997 (24. 09. 97) |

| Name and mailing address of the ISA/ | Authorized officer |
|---|---|
| Japanese Patent Office | |
| Facsimile No. | Telephone No. |

Form PCT/ISA/210 (second sheet) (July 1992)